(19) Europäisches Patentamt
European Patent Office
Office européen des brevets

(11) Numéro de publication: **0 197 250 B1**

(12) **FASCICULE DE BREVET EUROPEEN**

(45) Date de publication de fascicule du brevet: **29.04.92**

(51) Int. Cl.⁵: **A01N 61/02**, A01N 25/02, //(A01N61/02,47:22)

(21) Numéro de dépôt: **86101215.1**

(22) Date de dépôt: **30.01.86**

(54) **Nouvelles compositions herbicides à base de carbamoyloxy-phényl-carbamates et d'huile minérale de pétrole.**

(30) Priorité: **19.02.85 FR 8502361**

(43) Date de publication de la demande: **15.10.86 Bulletin 86/42**

(45) Mention de la délivrance du brevet: **29.04.92 Bulletin 92/18**

(84) Etats contractants désignés: **BE GB NL**

(56) Documents cités:
**BE-A- 892 864**
**DD-A- 209 097**
**FR-A- 1 544 172**
**FR-A- 2 462 101**
**US-A- 3 948 635**

(73) Titulaire: **ATOCHEM AGRI S.A.**
**1, rue des Frères Lumière**
**F-78370 Plaisir(FR)**

(72) Inventeur: **Courtade, Michel**
**32 Allée du Lac Supérieur**
**F-78110 Le Vésinet(FR)**
Inventeur: **Lemarchand, Michel**
**6 Résidence de la Ferme du Ru**
**F-27950 Sainte Colombe(FR)**
Inventeur: **Josselin, Pierre**
**Rue du Coq**
**F-27200 Vernon(FR)**
Inventeur: **Yard, Bertrand**
**13 Rue Victor Leray**
**F-27600 Gaillon(FR)**

(74) Mandataire: **Rinuy, Santarelli**
**14, avenue de la Grande Armée**
**F-75017 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(-/2.17/2.0)

## Description

La culture de la betterave, en particulier sucrière, a connu en France un développement important depuis plus de 30 ans. La surface ensemencée en betterave est passé de 340.000 ha en 1956 à 480.000 ha en 1984. Parallèlement, le rendement à l'hectare a connu une progression spectaculaire puisqu'il est passé de 29,2 tonnes en 1956 à 55,6 tonnes en 1984, soit une progression de 90,4%.

Si les progrès génétiques sur la qualité des semences (graines monogermes) expliquent en partie l'amélioration du rendement, c'est l'utilisation systématique des désherbants qui a permis en fait cette augmentation spectaculaire de la productivité à l'hectare. L'introduction du désherbage de post-levée a permis principalement de maîtriser la lutte contre les mauvaises herbes dans ce type de culture. On utilise actuellement dans le traitement herbicide en post-levée de la betterave sucrière ou fourragère des carbamoyloxy-phénylcarbamates.

Un herbicide particulièrement préféré est le (m-tolylcarbamoyloxy-3 phényl)carbamate de méthyle encore connu sous la dénomination PHENMEDIPHAME ou d'éthyle.

Cet herbicide est actuellement utilisé dans des compositions contenant en plus de la matière active une quantité d'agents émulsifiants importante. On procède à l'adjonction ex-temporanée au moment de l'emploi d'une huile minérale de pétrole émulsionnable dans l'eau. Cette matière active herbicide est utilisée plus particulièrement pour le désherbage dans des formulations du type suivant :

| | |
|---|---|
| - matière active PHENMEDIPHAME à 100% | 16,7% |
| - solvant organique (ISOPHORONE) | 63,3% |
| - agents émulsionnants | 20% |

Lors de l'application de la matière active, on procède généralement à un mélange ex-temporané de 3 l/ha de composition herbicide pour 1,5 l/ha d'huile minérale de pétrole. C'est-à-dire que l'on utilise environ 480 g/ha de PHENMEDIPHAME pour 1300 g/ha d'huile.

Comme on peut le constater, le mélange ex-temporané présente d'importants problèmes pour l'utilisateur qui souhaite généralement avoir un mélange prêt à l'emploi. Par ailleurs, la quantité importante d'agents émulsifiants et d'huile utilisée peut présenter dans certains cas des problèmes de phytotoxicité.

En procédant au mélange avant emploi de la composition sus-définie à base de matière active et de l'huile dans les proportions utilisées actuellement en mélange ex-temporané, on constate que l'on aboutit à une composition instable se séparant en deux phases et entraînant une cristallisation entre les phases.

La demanderesse a découvert maintenant qu'il était possible de préparer des compositions prêtes à l'emploi, stables au stockage en associant avec la matière active sus-définie, un agent émulsionnant, un solvant et une huile minérale de pétrole dans des proportions bien définies.

Elle a en effet constaté que la composition ainsi préparée était particulièrement stable au stockage et avait en plus une activité biologique améliorée pour des quantités en matières actives inférieures.

Un objet de l'invention est donc constitué par de nouvelles compositions herbicides.

Un autre objet est constitué par le procédé de traitement herbicide en post-levée de champs de betteraves (fourragères ou sucrières) mettant en oeuvre de telles compositions.

D'autres objets apparaîtront à la lecture de la description et des exemples qui suivent.

La composition conforme à l'invention est essentiellement caractérisée par le fait qu'elle contient :

- 5 à 30% d'un carbamoyloxy-phénylcarbamate répondant à la formule :

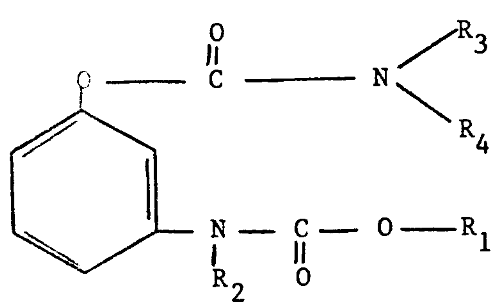

(I)

dans laquelle $R_1$ désigne un radical alkyle éventuellement substitué par un atome d'halogène, $R_2$ désigne un atome d'hydrogène, un radical alkyle, $R_3$ désigne un radical alkyle éventuellement substitué par un hétérocycle, un radical cycloalkyle, un radical aryle ou aralkyle éventuellement substitué par un ou plusieurs atomes d'halogène, un ou plusieurs radicaux alkyle, un ou plusieurs radicaux halogénoalkyle, un ou plusieurs radicaux alcoxy ou thioalkyle, $R_4$ représente un atome d'hydrogène ou un radical alkyle, $R_3$ et $R_4$ peuvent former conjointement avec l'atome d'azote un noyau hétérocyclique pouvant contenir d'autres atomes d'azote ou d'oxygène.

- 30 à 70% d'un solvant organique choisi parmi l'isophorone, le xylène, la cyclohexanone et le toluène,
- 10 à 30% d'une huile minérale de pétrole ayant les caractéristiques suivantes :
  - densité à 15 °C : 0,820 à 0,885 (NFT 60-101)
  - viscosité cinématique à 40 °C : 9 à 33 cSt (NFT 60-100)
  - indice d'acide mg/KOH/g : 0,05 maximum (NFT 60-112)
  - point d'écoulement : -15 °C maximum (NFT 60-105)
  - indice de sulfonation : 70 minimum (PNU 43.216).
- 5 à 15% d'agents émulsifiants comprenant au moins un tensio-actif anionique,

les proportions étant exprimées en poids par rapport au poids total de la composition.

Les compositions conformes à l'invention peuvent également contenir des agents dits "adhésifs" permettant d'améliorer le contact de la substance active herbicide avec les feuilles lors du traitement herbicide en post-levée. Ces agents peuvent être présents dans des proportions de 5 à 25% en poids par rapport au poids total de la composition.

Dans la formule I, le radical alkyle désigne de préférence un radical ayant 1 à 4 atomes de carbone, et en particulier méthyle ou éthyle. Parmi les composés, ceux pour lesquels $R_1$ désigne alkyle, $R_2$ désigne hydrogène, $R_4$ désigne hydrogène et $R_3$ désigne aryle substitué par alkyle, sont préférés.

La substance active particulièrement préférée répond à la formule ci-dessous :

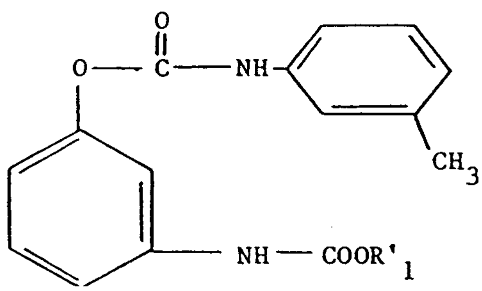

dans laquelle $R'_1$ désigne méthyle ou éthyle. Il s'agit notamment du produit connu sous la dénomination PHENMEDIPHAME.

Comme agents émulsionnants, on utilise des agents tensio-actifs anioniques et de préférence un mélange avec des agents tensio-actifs non-ioniques. Des agents tensio-actifs non-ioniques plus particulièrement avantageux sont les alkylphénols oxyéthylénés ou polyglycérolés tels que l'octylphénol oxyéthyléné, le nonylphénol oxyéthyléné, le tributylphénol polyglycérolé, les éthers alkylaryl polyglycoliques, les alcools gras oxyéthylénés ou polyglycérolés tels que l'alcool oléïque polyoxyéthyléné, l'alcool laurique polyoxyéthyléné, l'alcool cétylique polyoxyéthyléné, l'alcool cétylstéarylique polyoxyéthyléné, l'alcool stéarylique polyoxyéthyléné, l'huile de ricin polyoxyéthyléné, les acétals d'éther polyglycolique de l'alcool laurylique.

A titre d'agents de surface anioniques, on peut citer les alkylsulfonates et les alkylarylsulfonates dont le radical alkyle est une chaîne linéaire comportant 12 à 18 atomes de carbone, les $\alpha$-oléfine sulfonates comportant une chaîne linéaire ayant 12 à 18 atomes de carbone, les alkylsulfates, alkyléthersulfate.

Un mélange d'agents émulsionnants particulièrement préféré est constitué par le mélange d'un agent tensio-actif non-ionique qui est un alkylarylphénolpolyoxyéthyléné avec un agent de surface anionique constitué par le dodécylbenzènesulfonate de calcium.

Les solvants sont choisis parmi l'isophorone, le xylène, la cyclohexanone et le toluène, qui sont les solvants organiques habituellement utilisés dans les compositions herbicides ou phytosanitaires.

Le rapport entre l'huile et le solvant est compris de préférence entre 1:7 et 1:1.

L'huile et l'émulsifiant étant choisis en vue de conférer à la composition un pH acide compris de préférence entre 4 et 6.

Ces compositions peuvent également contenir d'autres agents herbicides tels que des herbicides de la famille des benzofurannes ou des triazines comme par exemple le méthane sulfonate d'éthoxy-2 diméthyl-3,3 dihydro-2,3 benzofurannyle-5 connu sous la dénomination ETHOFUMESATE ou l'amino-4 méthyl-3 phényl 6 dihydro-4,5 triazine-1,2,4 one-5 connu sous la dénomination de METAMITRONE ou être mélangées au moment de l'application avec des compositions contenant ces herbicides.

Ces compositions ont été testées pour leur efficacité sur les mauvaises herbes et leur sélectivité sur la betterave. Après l'essai biologique dit de "screening" en serre favorable, une expérimentation plein champ dans les conditions de la pratique agricole a été mise au point suivant la méthodologie C.E.B. utilisée pour l'homologation officielle des spécialités herbicides par le Ministère Français de l'Agriculture. L'expérimentation comprend des essais de comportement et des essais de sélectivité.

L'étude a également été effectuée en comparaison avec le mélange ex-temporané comprenant le PHENMEDIPHAME ajouté d'une huile adjuvante vendue sous la dénomination ACTIPLUS par la Société RSR et homologué pour l'utilisation des herbicides en post-levée de la betterave sucrière.

Les traitements ont été effectués en post-levée en deux fois :

le premier au stade deux feuilles développées de la betterave;

le second à 6 à 10 jours plus tard suivant la technique préconisée par l'Institut de la Betterave.

Après différents essais qui seront décrits plus en détail en relation avec les exemples de la réalisation pratique décrits ci-après, la demanderesse a constaté une stabilité remarquable des compositions conformes à l'invention, une activité biologique améliorée pour des proportions en matière active inférieures ou pour des quantités d'agents émulsifiants inférieures à celles préconisées dans l'état de la technique. Par ailleurs, les compositions conformes à l'invention permettent d'utiliser moins d'huile à l'hectare, diminuant de ce fait les risques de phytotoxicité.

Les compositions conformes à l'invention sont appliquées en post-levée sur des champs de betterave à raison de 1 à 10 l/ha après mélange avec de l'eau, la composition étant autoémulsionnable.

Les exemples suivants sont destinés à décrire l'invention sans présenter pour autant un caractère limitatif.

EXEMPLE 1

La composition suivante a été préparée :

COMPOSITION A

| | |
|---|---|
| PHENMEDIPHAME Technique à 98% | 11 |
| ISOPHORONE | 55 |
| Agents émulsifiants constitués par un mélange de dodécylbenzènesulfonate de calcium et d'alkylaryl-phénol polyoxyéthyléné | 13,5 |
| Huile minérale de pétrole présentant les caractéristiques suivantes :<br>densité à 15°C : 0,875<br>viscosité à 40°C : 30 cSt<br>indice acide : 0,03 mg/KOH/g<br>Point éclair AFNOR : 220°C<br>Point d'écoulement : -12°C<br>Indice de sulfonation : 85 | qsp 100 |

Les proportions étant exprimées en poids.

Cette composition est auto-émulsionnable dans l'eau.

ESSAIS DE COMPORTEMENT

On a réalisé les essais suivants sur des parcelles ayant une largeur correspondant à 4 à 6 rangs de betteraves sur une longueur minimale de 10 mètres. Des bandes témoins non traitées étaient incluses. Les traitements ont été réalisés deux fois à 6 à 10 jours d'intervalle. La composition a été comparée au produit actuellement utilisé.

a) Composition vendue sous la dénomination BETANAL par la Société SCHERING, 3 l/ha (480 g/ha) de matière active ajoutée d'huile vendue sous la dénomination ACTIPLUS par la Société RSR, 1,5 l/ha (1300 g/ha) par mélange ex-temporané.

b) Composition A appliquée à 3,5 l/ha qui correspond à 358 g/ha de substance active et à 680 g/ha d'huile.

Chaque essai comprenait quatre répétitions et 10 essais ont été mis en place dans toutes les régions où la culture de la betterave sucrière est réalisée. Lors du premier traitement de chaque essai, un comptage des betteraves a été effectué sur les deux rangs centraux de chaque parcelle et lorsque l'effet maximal du traitement a été atteint, un second comptage a été réalisé afin de déceler d'éventuelles disparitions de plantules.

Les mauvaises herbes ont fait l'objet d'un dénombrement espèce par espèce effectué deux à trois semaines après le premier traitement.

Les résultats de cette expérimentation ont été les suivants :

aucune disparition de plantules n'a été constaté avec la composition A.

L'efficacité herbicide est totale puisque l'on arrive à une destruction de 80% des mauvaises herbes pour une dose en matière active à l'hectare inférieure à celle de la composition de l'état de la technique.

L'efficacité herbicide pour les espèces d'adventices les plus répandues est identique ou améliorée.

ESSAI DE SELECTIVITE

Les parcelles ont été disposées parallèlement aux lignes de semi (longueur 10 mètres, largeur équivalente à 6 rangs). Les traitements ont été réalisés suivant la méthodologie C.E.B.

a) Composition vendue sous la dénomination BETANAL par la Société SCHERING à 3 l/ha additionnée de façon ex-temporanée à raison de 1,5 l/ha, d'une huile vendue sous la dénomination ACTIPLUS par la Société RSR.

b) Composition vendue sous la dénomination BETANAL par la Société SCHERING, 6 l/ha additionnée de façon ex-temporanée d'une huile vendue sous la dénomination ACTIPLUS à raison de 3 l/ha.

c) Composition A : utilisée à 3,5 l/ha.

d) Composition A : utilisée à 7 l/ha.

Deux traitements herbicides entre 6 et 10 jours d'intervalle ont été réalisés comme pour les essais des comportements. Chaque essai comportait quatre répétitions avec six localisations dans les zones principales de production de betteraves sucrières. Les comptages de betteraves ont été effectués avant et après les traitements. La récolte a été faite parcelle par parcelle, les betteraves des deux rangs centraux ont été arrachées sur une longueur de 7 ou 8 mètres suivant les lieux d'essais puis décolletées, comptées, pesées à réception de raffineries où la richesse sucrière a été déterminée.

Les résultats de ces essais ont été les suivants :

aucune disparition de plantules n'a été constatée avec la composition A, même aux doses doubles.

On n'a constaté aucune différence nette en ce qui concerne le rendement à l'hectare et la richesse sucrière par rapport aux parcelles traitées avec la composition vendue sous la dénomination BETANAL associée à l'huile ACTIPLUS.

Il résulte de ces essais que la composition conforme à l'invention contenant des doses inférieures en matière active conduit à une efficacité biologique améliorée.

EXEMPLE 2

La composition suivante a été préparée :

COMPOSITION B :

| | |
|---|---|
| PHENMEDIPHAME | 13 |
| ISOPHORONE | 65 |
| Agents émulsifiants constitués par un mélange de dodécylbenzènesulfonate de calcium et d'alkylaryl-phénol polyoxyéthylèné | 7 |
| Huile minérale de pétrole ayant les caractéristiques suivantes :<br>densité à 15°C : 0,827<br>viscosité cinématique à 40°C : 14,5 cSt<br>indice acide : 0,02 mg/KOH/g<br>point éclair AFNOR : 190°C<br>point d'écoulement : -13°C<br>indice sulfonation : 97<br>qsp | 100 |

Cette composition est particulièrement stable au stockage.

En effectuant les mêmes essais que ceux décrits dans l'exemple 1, en utilisant dans ce cas la composition B à des doses de 4 l/ha correspondant à 484 g/ha de PHENMEDIPHAME et 570 g/ha d'huile, on a pu constater les résultats figurant dans le tableau ci-après, dans lequel figurent également les résultats de l'exemple 1.

| PHENMEDIPHAME -HUILE / MAUVAISES HERBES | Formulation A | Formulation B | BETANAL + ACTIPLUS |
|---|---|---|---|
| | 358 g/ha<br>680 g/ha | 484 g/ha<br>570 g/ha | 480 g/ha<br>1300 g/ha |
| Sanve | 95 | 95 | 95 |
| Renouée | 90 | 90 | 90 |
| Bifora | 80 | 74 | 71 |
| Véronique | 98 | 100 | 98 |
| Géranium | 60 | 79 | 55 |
| Gaillet | 45 | 59 | 45 |

Les essais de sélectivité ont donné des résultats similaires que ceux décrits dans l'exemple 1.

EXEMPLE 3

Les compositions des exemples 1 et 2 ont été associées avec d'autres herbicides utilisés dans la pratique. Ainsi appliquée, une formulation contenant en plus des composants définis dans l'exemple 1, du méthanesulfonate d'éthoxy-2 diméthyl-3,3 dihydro-2,3 benzofurannyle-5 plus connu sous la dénomination ETHOFUMESATE à raison de 400 g/ha pour 1,7 l/ha de composition A. Chaque essai comprend comme indiqué ci-dessus quatre répétitions et 10 essais sont mis en place dans toutes les régions où la culture de la betterave sucrière est réalisée. On constate également avec cette association des résultats au niveau des propriétés biologiques et de sélectivité remarquables.

Un autre traitement herbicide a été réalisé en associant avec la composition A l'amino-4 méthyl-3 phényl-6 dihydro-4,5 triazine-1,2,4 one-5 plus connu sous la dénomination METAMITRONE à raison de 1400 g/ha pour 1,7 l/ha de composition A.

On constate tout comme précédemment des résultats remarquables.

## Revendications

1. Composition herbicide caractérisée par le fait qu'elle contient 5 à 30% d'un carbamoyloxy-phénylcarbamate répondant à la formule :

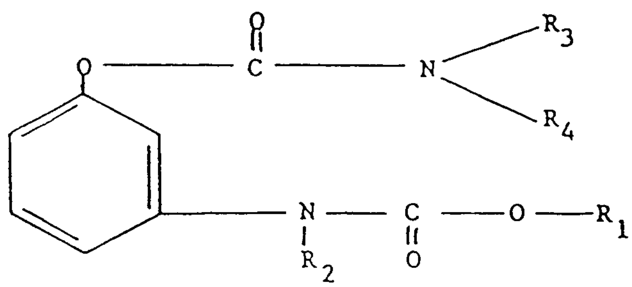

dans laquelle $R_1$ représente un radical alkyle éventuellement substitué par un atome d'halogène, $R_2$ représente un atome d'hydrogène ou un radical alkyle, $R_3$ désigne un radical alkyle éventuellement substitué par un radical hétérocyclique, un radical cycloalkyle ou un radical aryle ou aralkyle éventuellement substitué par un atome d'halogène, ou bien un ou plusieurs radicaux alkyle ou bien un ou plusieurs radicaux halogénoalkyle ou bien des radicaux alcoxy ou bien un ou plusieurs radicaux thioalkyle, $R_4$ représente un atome d'hydrogène ou un radical alkyle, $R_3$ et $R_4$ pour former conjointement avec l'atome d'azote auquel ils sont reliés un noyau hétérocyclique pouvant contenir d'autres hétéro-atomes choisis parmi l'azote et/ou l'oxygène.

- 30 à 70% d'un solvant organique choisi parmi l'isophorone, le xylène, la cyclohexanone et le toluène,
- 10 à 30% d'une huile minérale de pétrole ayant les caractéristiques suivantes :
  - densité à 15 ° C : 0,820 à 0,885
  - viscosité cinématique à 40 ° C : 9 à 33 cSt
  - indice d'acide : maximum 0,05 mg/KOH/g
  - point éclair : 180 ° C minimum
  - point d'écoulement : -15 ° C maximum
  - indice de sulfonation : 70 minimum
- 5à 15% d'agents émulsionnants comprenant un tensio-actif anionique.

**2.** Composition selon la revendication 1, caractérisée par le fait que la matière active est constituée par un composé de formule :

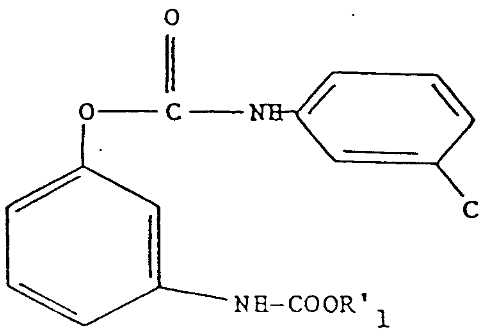

dans laquelle $R'_1$ désigne méthyle ou éthyle.

**3.** Composition selon l'une quelconqu des revendications 1 ou 2, caractérisée par le fait que l'agent émulsifiant est un mélange d'agents tensio-actifs anioniques et non-ioniques.

**4.** Composition selon l'une quelconque des revendications 1 à 3, caractérisée par le fait que l'agent tensio-actif est un mélange d'alkylarylphénols polyoxyéthylénés et de dodécylbenzènesulfonates.

**5.** Composition selon l'une quelconque des revendications 1 à 4, caractérisée par le fait que le rapport huile/solvant est compris entre 1:7 et 1:1.

**6.** Composition selon l'une quelconque des revendications 1 à 5, caractérisée par le fait qu'elle est acide.

**7.** Composition selon l'une quelconque des revendications 1 à 6, caractérisée par le fait qu'elle contient en plus des agents adhésifs dans des proportions de 5 à 25% en poids.

**8.** Composition selon l'une quelconque des revendications 1 à 7 , caractérisée par le fait qu'elle contient en plus des herbicides choisis parmi la benzofuranne et les triazines.

**9.** Composition selon la revendication 1, caractérisée par le fait qu'elle contient

- 5 à 30% d'une matière active constituée par un composé de formule

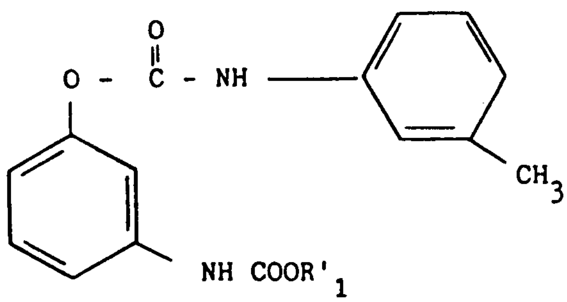

où $R_1$ désigne méthyle ou éthyle
- 30 à 70% d'isophorone
- 10 à 30% d'une huile minérale de pétrole ayant les caractéritiques suivantes :
  - densité à 15 ° C : 0,820 à 0,885
  - viscosité cinématique à 40 ° C : 9 à 33 cSt
  - indice d'acide : maximum 0,05 mg/KOH/g
  - point d'éclair : 180 ° C minimum
  - point d'écoulement : -15 ° C maximum
  - indice de sulfonation : 70 minimum.

- 5 à 15 % d'un agent tensio actif constitué par un mélange d'alkylaryl phenols polyoxyethylénés et de dodecylbenzenesulfonates.

**10.** Procédé de traitement herbicide en post-levée, caractérisé par le fait quel'on utilise au moins une composition telle que définie dans l'une quelconque des revendications 1 à 10.

**11.** Procédé selon la revendication 11, caractarisé par le fait que la composition est utilisée à des doses de 1 à 10 l/ha.

## Claims

**1.** Herbicidal composition, characterised in that it contains 5 to 30% of a carbamoyloxyphenylcarbamate corresponding to the formula:

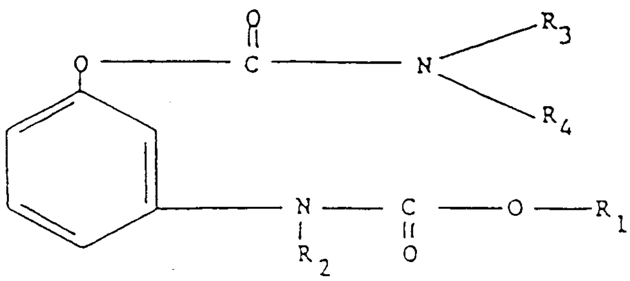

in which $R_1$ represents an alkyl radical optionally substituted with a halogen atom, $R_2$ represents a hydrogen atom or an alkyl radical, $R_3$ denotes an alkyl radical optionally substituted with a heterocyclic radical, a cycloalkyl radical or an aryl or aralkyl radical optionally substituted with a halogen atom or alternatively one or more alkyl radicals or alternatively one or more haloalkyl radicals or alternatively alkoxy radicals or alternatively one or more thioalkyl radicals, and $R_4$ represents a hydrogen atom or an alkyl radical, or $R_3$ and $R_4$, together with the nitrogen atom to which they are attached, can form a heterocyclic ring-system which can contain other hetero atoms selected from nitrogen and/or oxygen,

- 30 to 70% of an organic solvent selected from isophorone, xylene, cyclohexanone and toluene,
- 10 to 30% of a petroleum mineral oil having the following characteristics:
  - density at 15 ° C : 0.820 to 0.885
  - kinematic viscosity at 40 ° C : 9 to 33 cSt
  - acid number : maximum 0.05 mg/KOH/g
  - flash point : 180 ° C minimum
  - flow point : -15 ° C maximum
  - sulphonation number : 70 minimum
- 5 to 15% of emulsifying agents comprising an

anionic surfactant.

**2.** Composition according to Claim 1, characterised in that the active substance consists of a compound of formula

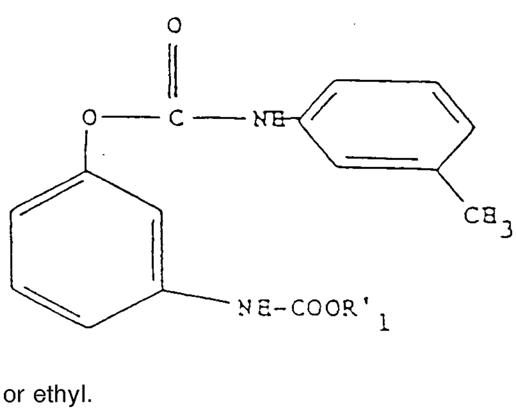

in which $R'_1$ denotes methyl or ethyl.

3. Composition according to either of Claims 1 and 2, characterised in that the emulsifying agent is a mixture of anionic and nonionic surfactants.

4. Composition according to any one of Claims 1 to 3, characterised in that the surfactant is a mixture of dodecylbenzenesulphonates and polyoxyethylenated alkylarylphenols.

5. Composition according to any one of Claims 1 to 4, characterised in that the oil/solvent ratio is between 1:7 and 1:1.

6. Composition according to any one of Claims 1 to 5; characterised in that it is acidic.

7. Composition according to any one of Claims 1 to 6, characterised in that it contains, in addition, adhesive agents in proportions of 5 to 25% by weight.

8. Composition according to any one of Claims 1 to 7, characterised in that it contains, in addition, herbicides selected from benzofuran and triazines.

9. Composition according to Claim 1, characterised in that it contains
   - 5 to 30% of an active substance consisting of a compound of formula

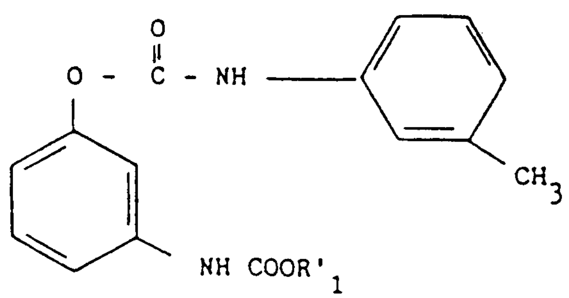

     where $R_1$ denotes methyl or ethyl
   - 30 to 70% of isophorone
   - 10 to 30% of a petroleum mineral oil having the following characteristics:
     - density at 15 ° C : 0.820 to 0.885
     - kinematic viscosity at 40 ° C : 9 to 33 cSt
     - acid number : maximum 0.05 mg/KOH/g
     - flash point : 180 ° C minimum
     - flow point : -15 ° C maximum
     - sulphonation number : 70 minimum
   - 5 to 15% of a surfactant consisting of a mixture of dodecylbenzenesulphonates and polyoxyethylenated alkylarylphenols.

10. Post-emergence herbicidal treatment process, characterised in that at least one composition as defined in any one of Claims 1 to 10 is used.

11. Process according to Claim 11, characterised in that the composition is used at doses of 1 to 10 l/ha.

**Patentansprüche**

1. Herbizide Zusammensetzung, dadurch gekennzeichnet, daß sie enthält:

   5 bis 30 % eines Carbamyloxyphenylcarbamats der folgenden Formel

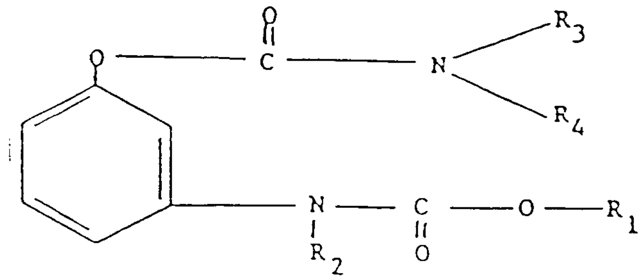

worin $R_1$ ein Alkylradikal bedeutet, das gegebenenfalls mit einem Halogenatom substituiert ist,
$R_2$ ein Wasserstoffatom oder ein Alkylradikal ist,
$R_3$ ein Alkylradikal, das gegebenenfalls mit einem heterocyclischen Radikal substituiert ist, ein Cycloalkylradikal oder ein Aryl- oder Aralkylradikal, das gegebenenfalls mit einem Halogenatom, einem oder mehreren Alkylradikalen oder einem oder mehreren Halogenalkylradikalen oder Alkoxyradikalen oder einem oder mehreren Thioalkylradikalen substituiert ist, bedeutet,
$R_4$ ein Wasserstoffatom oder ein Alkylradikal ist, wobei
$R_3$ und $R_4$ zusammen mit dem Stickstoffatom, an das sie gebunden sind, einen heterocyclischen Ring bilden können, der auch andere Heteroatome, wie Stickstoff und/oder Sauerstoff, enthalten kann,

- 30 bis 70% eines organischen Lösungsmittels, ausgewählt unter Isophoron, Xylol, Cyclohexanon und Toluol,
- 10 bis 30 % eines mineralischen Petroleumöls mit folgenden Merkmalen:
  - Dichte bei 15 °C: 0,820 bis 0,885
  - kinematische Viskosität bei 40 °C: 9 bis 33 cSt
  - Säurezahl: max. 0,05 mg/KOH/g
  - Flammpunkt: 180 °C min.
  - Stockpunkt: -15 °C max.
  - Sulfanierungszahl: 70 min.
- 5 bis 15 % Emulgiermittel einschließlich eines anionisch grenzflächenaktiven Mittels.

**2.** Zusammensetzung gemäß Anspruch 1, dadurch gekennzeichnet, daß der Wirkstoff aus einer Verbindung der Formel

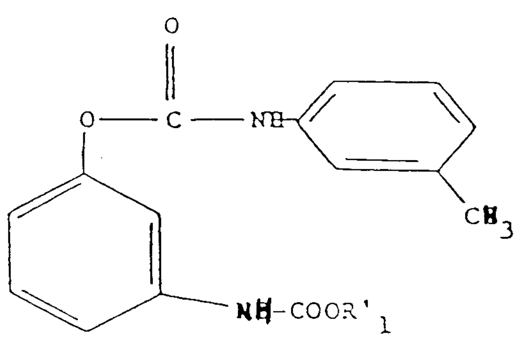

besteht, wobei $R'_1$ Methyl oder Ethyl bezeichnet.

**3.** Zusammensetzung gemäß irgendeinem der Ansprüche 1 bis 2, dadurch gekennzeichnet, daß das Emulgiermittel ein Gemisch aus anionisch und nichtionisch grenzflächenaktiven Mitteln ist.

**4.** Zusammensetzung gemäß irgendeinem der Ansprüche 1 bis 3, dadurch gekennzeichnet, daß das grenzflächenaktive Mittel ein Gemisch aus Alkylarylphenolen, Polyoxyethlenen und Dodecylbenzolsulfonaten ist.

**5.** Zusammensetzung gemäß irgendeinem der Ansprüche 1 bis 4, dadurch gekennzeichnet, daß das Verhältnis Öl/Lösungsmittel zwischen 1:7 und 1:1 liegt.

6. Zusammensetzung gemäß irgendeinem der Ansprüche 1 bis 5, dadurch gekennzeichnet, daß sie sauer ist.

7. Zusammensetzung gemäß irgendeinem der Ansprüche 1 bis 6, dadurch gekennzeichnet, daß sie zusätzlich Klebemittel in Anteilen von 5 bis 25 Gew.-% enthält.

8. Zusammensetzung gemäß irgendeinem der Ansprüche 1 bis 7, dadurch gekennzeichnet, daß sie zusätzlich Herbizide, ausgewählt aus Benzofuran und Triazinen, enthält.

9. Zusammensetzung gemäß Anspruch 1, dadurch gekennzeichnet, daß sie enthält:
   - 5 bis 30 % eines Wirkstoffs, der aus einer Verbindung der Formel

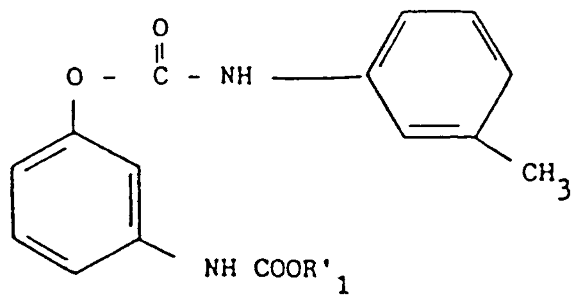

     besteht, worin $R'_1$ Methyl oder Ethyl bezeichnet,
   - 30 bis 70 % Isophoron,
   - 10 bis 30 % eines mineralischen Petroleumöls mit folgenden Merkmalen:
     - Dichte bei 15 ° C: 0,820 bis 0,885
     - kinematische Viskosität bei 40 ° C: 9 bis 33 cSt
     - Säurezahl: max. 0,05 mg/KOH/g
     - Flammpunkt: 180 ° C min.
     - Stockpunkt: -15 ° C max.
     - Sulfonierungszahl: 70 min.
   - 5 bis 15% eines grenzflächenaktiven Mittels, bestehend aus einem Gemisch aus Alkylarylphenolen, Polyoxyethylenen und Dodecylbenzolsulfonaten.

10. Behandlungsverfahren mit Herbiziden nach dem Auflaufen der Saat, dadurch gekennzeichnet, daß man wenigstens eine Zusammensetzung gemäß irgendeinem der Ansprüche 1 bis 9 einsetzt.

11. Verfahren gemäß Anspruch 10, dadurch gekennzeichnet, daß die Zusammensetzung in Mengen von 1 bis 10 l/ha eingesetzt wird.